# EUROPEAN PATENT APPLICATION

(11) **EP 3 160 137 A1**
(43) Date of publication of application: **26.04.2017**
(21) Application number: 14895405.0
(22) Date of filing: 26.09.2014
(51) Int. Cl.: H04N 7/15

(54) **MULTIMEDIA COLLABORATION SYSTEM, CONTROL METHOD OF APPARATUS AND DEVICE**

(30) Priority: 20.06.2014 CN 201410281123
(71) Applicant: ZTE Corporation, Shenzhen, Guangdong 518057 (CN)
(72) Inventor: SUN, Bo, Shenzhen Guangdong 518057 (CN); LU, Ping, Shenzhen Guangdong 518057 (CN); LI, Jun, Shenzhen Guangdong 518057 (CN)
(74) Representative: HGF Limited
(86) International application number: PCT/CN2014/087612
(87) International publication number: WO 2015/192529

(57) **Abstract**

The present invention discloses a multimedia collaboration system, and a device control method and apparatus. Herein, the multimedia collaboration system includes: a video conference system and an office device, herein the video conference system is arranged to control the office device; and the office device is arranged to respond to the control of the video conference system. By means of the present invention, the problem that the function of the video conference is relative single and independent is solved, thereby implementing the collaboration between the video conference system and the office device.

## Description

### Technical Field

The present invention relates to the field of communications, and particularly to a multimedia collaboration system, and a device control method and apparatus.

### Background of the Related Art

A video conference is a technology capable of implementing "real-time, visual, interactive" multimedia communication between people at different places by means of a certain transmission medium. By means of various communication transmission media, many kinds of information including static/dynamic images, voices, words and pictures are sent to a terminal device of each user respectively, such that users scattered geographically may communicate in multiple manners such as graphs and sounds, etc, improving the content understanding ability of many parties. It looks like conferencing in one conference room.

Functions of video conference televisions emerging in the current market not only have audio and video transmission, but also the transmission of a secondary video may be achieved by means of a dual-video stream transmission technology such as H.239 and other relevant protocols. Generally, a primary video transmits figure image videos, the secondary video transmits contents needing to be shared, and some manufacturers have implemented multi-secondary video functions, namely allowing many participants to send secondary videos at the same time in an identical video conference. Besides, called terminal types are also rich, a conference television device as well as network communication tools such as mobile phones, Pad and Skype can be called.

Along with the development of a video technology and relevant peripheral devices, a current video conference system not only can provide video transmission, but also may fully implement the collaboration between participants by means of additional functions of a video conference system such as an electronic whiteboard, a dual-video technology, and remote application program sharing, etc.

However, video conference functions in related art are relatively single and independent. An effective solution is not proposed yet for solving this problem at present.

### Content of the Invention

Regarding to the problem that the function of video conference is relatively single and independent, the present invention provides a multimedia collaboration system, and a device control method and apparatus, which are intended to at least solve the above mentioned problems.

According to one aspect of the present invention, a multimedia collaboration system is provided, which includes: a video conference system and office devices, wherein the video conference system is arranged to control the office devices; and the office devices are arranged to respond to control of the video conference system.

Alternatively, the video conference system includes: a first communication apparatus, arranged to communicate with the office devices; and a control apparatus, arranged to control the office devices.

Alternatively, the control apparatus is arranged for at least one of: acquiring conference data, and controlling the office devices to process the conference data; controlling the office devices to operate themselves; controlling operations among the office devices; and acquiring data from the office devices and processing the data.

Alternatively, an office device includes: a second communication apparatus, arranged to communicate with the video conference system; and a processing apparatus, arranged to respond to the control of the video conference system

Alternatively, the processing apparatus is arranged for at least one of: processing conference data according to the control of the video conference system; operating the office device itself; processing operations among the office devices; and sending data to the video conference system.

Alternatively, an intermediate device is further included, the video conference system is further arranged to control the office devices by means of the intermediate device; the intermediate device is arranged to control the office devices in response to a control request of the video conference system; and the office devices are arranged to respond to the control of the intermediate device over the office devices.

Alternatively, the intermediate device is arranged to receive a first control command of the video conference system, convert the first control command into a second control command corresponding to the office devices, and send the second control command to the office devices.

According to another aspect of the present invention, a device control method is provided, which includes: establishing connection between a video conference system and office devices; and controlling, by the video conference system, the office devices.

Alternatively, establishing connection between the video conference system and the office devices includes at least one of: establishing connection with the office devices in response to a request of a user, wherein the request of the user comprising a voice and/or operation form request; identifying semantics of the user, and automatically establishing connection with the office devices; and establishing connection with the office devices in response to a request of the office devices.

Alternatively, controlling, by the video conference system, the office devices includes at least one of: controlling, by the video conference system, the office devices to process conference data; controlling, by the video conference system, the office devices to operate themselves; controlling, by the video conference system, the office devices to operate with other office devices; and acquiring, by the video conference system, data from the office devices, and processing the data.

Alternatively, controlling, by the video conference system, the office devices includes: controlling, by the video conference system, the office devices according to a request of a user, wherein the request includes a voice and/or operation form request; and/or identifying, by the video conference system, semantics of the user, and automatically controlling the office devices according to the semantics.

According to another aspect of the present invention, a device control method is provided, which includes: establishing connection between office devices and a video conference system; and responding by the office devices to the control of the video conference system.

Alternatively, responding by the office devices to the control of the video conference system includes at least one of: processing, by the office devices, conference data according to the control of the video conference system; operating the office devices themselves; processing, by the office devices, operation among the office devices; and sending, by the office devices, data to the video conference system.

According to another aspect of the present invention, a device control method is provided, which includes: receiving, by an intermediate device, a first control command of a video conference system; and controlling, by the intermediate device, office devices according to the first control command.

Alternatively, controlling, by the intermediate device, the office devices according to the first control command includes: converting, by the intermediate device, the first control command into a second control command corresponding to the office devices; and sending, by the intermediate device, the second control command to the office devices. Alternatively, the above-mentioned method further includes: receiving, by the intermediate device, first data sent by the office devices; and sending, by the intermediate device, second data to the video conference system, wherein the second data are data obtained by processing the first data.

According to another aspect of the present invention, a device control apparatus is provided, which is located in a video conference system and includes: an establishment module, arranged to establish connection between the video conference system and office devices; and a control module, arranged to control the office devices.

Alternatively, the establishment module includes at least one of: a first establishment unit, arranged to establish connection with the office devices in response to a request of a user, wherein the request of the user comprising a voice and/or operation form request; a second establishment unit, arranged to identify semantics of the user, and automatically establish connection with the office devices; and a third establishment unit, arranged to establish connection with the office devices in response to a request of the office devices.

Alternatively, the control module includes at least one of: a first control unit, arranged to control the office devices to process conference data; a second control unit, arranged to control the office devices to operate themselves; a third control unit, arranged to control the office devices to operate with other office devices; and a fourth control unit, arranged to acquire data from the office devices and process the data.

Alternatively, the control module includes: a fifth control unit, arranged to control the office devices according to a request of a user, wherein the request comprising a voice and/or operation form request; and/or a sixth control unit, arranged to identify semantics of the user, and automatically control the office devices according to the semantics.

According to another aspect of the present invention, a device control apparatus is provided, which is located in an office device and includes: an establishment module, arranged to establish connection between an office devices and a video conference system; and a processing module, arranged to respond to control of the video conference system. Alternatively, the processing module includes at least one of: a first processing unit, arranged to process conference data according to the control of the video conference system; a second processing unit, arranged to operate the office devices themselves; a third processing unit, arranged to process operation among the office devices; and a fourth processing unit, arranged to send data to the video conference system.

According to another aspect of the present invention, a device control apparatus is provided, which is located in an intermediate device and includes: a receiving module, arranged to receive a first control command of a video conference system; and a control module, arranged to control office devices according to the first control command. Alternatively, the control module includes: a conversion unit, arranged to convert the first control command into a second control command corresponding to the office devices; and a sending unit, arranged to send the second control command to the office devices.

Alternatively, the receiving module is further arranged to receive first data sent by the office devices; and the apparatus further includes: a sending module, arranged to send second data to the video conference system, wherein the second data are data obtained by processing the first data.

By means of the present invention, the video conference system is arranged to control the office devices; and the office devices are arranged to respond to the control of the video conference system. The problem that the function of a video conference is relatively single and independent is solved, thereby achieving the implementation of the collaboration between the video conference system and the office devices.

### Brief Description of Drawings

The accompanying drawings described herein are intended to provide further understanding of the present invention, and form part of the present application. The schematic embodiments and descriptions thereof of the present invention are intended to explain the present invention, and do not form improper limits to the present invention. In the accompanying drawings:
FIG. 1 is a diagram of a multimedia collaboration system according to an embodiment of the present invention;
FIG. 2 is a diagram of a preferred multimedia collaboration system according to an embodiment of the present invention;
FIG. 3 is a flowchart one of a device control method according to an embodiment of the present invention;
FIG. 4 is a flowchart two of a device control method according to an embodiment of the present invention;
FIG. 5 is a flowchart three of a device control method according to an embodiment of the present invention;
FIG. 6 is a structural block diagram one of a device control apparatus according to an embodiment of the present invention;
FIG. 7 is a structural block diagram two of a device control apparatus according to an embodiment of the present invention;
FIG. 8 is a structural block diagram three of a device control apparatus according to an embodiment of the present invention;
FIG. 9 is an architecture diagram of a preferred multimedia collaboration system according to an embodiment of the present invention;
FIG. 10 is a flowchart of a preferred device control method according to an embodiment of the present invention; and
FIG. 11 is a flowchart showing implementation of printing of a conference television system in a conference process according to an embodiment of the present invention.

### Preferred Embodiments of the Present Invention

The present invention will be elaborated below with reference to the accompanying drawings and in combination with the embodiments. It is important to note that the embodiments in the present application and the features in the embodiments may be mutually combined without conflicts.

In the following embodiments, devices may be various types of devices such as a computer, a server and a gateway, etc. The devices may run operating systems, and the operating systems may include Windows, iOS and the like. An office device may include, but is not limited to, a printer, a copying machine, a fax machine, a scanner, a computer and the like.

In the following embodiments, "first", "second" and similar descriptions do not represent an order of precedence, and objects represented by 'first' and 'second' may be identical or different.

It may be predicted that the apparatus and method of the following embodiments may be implemented by means of a computer program unit. Correspondingly, the device may include a processor and a storage medium, the storage medium may store the computer program unit, and the processor may execute the computer program unit.

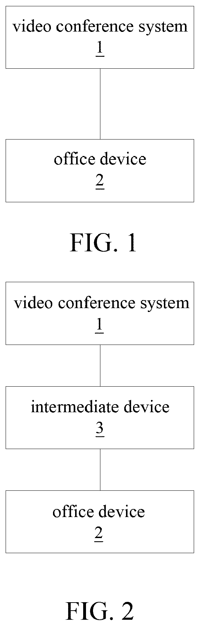

FIG. 1 is a schematic diagram of a multimedia collaboration system according to an embodiment of the present invention. As shown in FIG. 1, the system includes: a video conference system 1 and an office device 2. Herein the video conference system 1 is arranged to control the office device 1; and the office device 2 is arranged to respond to the control of the video conference system 2.

In the embodiment of the present invention, the above-mentioned office device 2 may be one or more office devices. Correspondingly, the video conference system 1 may control one office device or control a plurality of office devices.

In one implementation mode of the embodiment of the present invention, the video conference system 1 may include: a first communication apparatus, arranged to communicate with the office device 2; and a control apparatus, arranged to control the office device 2.

In a preferred implementation mode of the embodiment of the present invention, the above-mentioned control apparatus may be arranged for at least one of: (1) acquiring conference data, and controlling the office device to process the conference data, e.g., controlling a printer to print presentation documents in a video conference and so on; (2) controlling the office device to operate itself, e.g., controlling, in a video conference, one projector to open, close and adjust and so on; (3) controlling operations among office devices, e.g., controlling one office device to operate other office devices and so on; and (4) acquiring data from the office device, and processing the acquired data.

In one implementation mode of the embodiment of the present invention, the office device 2 may include: a second communication apparatus, arranged to communicate with the video conference system; and a processing apparatus, arranged to respond to the control of the video conference system.

In a preferred implementation mode of the embodiment of the present invention, the processing apparatus may be arranged for at least one of: (1) processing conference data according to the control of the video conference system, e.g., printing via the printer, and backing up conference documents via the computer; (2) operating the office device itself, e.g., opening, closing and adjusting the projector; (3) processing the operation among office devices, e.g., performing interaction between the office devices; and (4) sending data to the video conference system.

In an actual application scenario, models, manufacturers and standards of the office device are diversified, which may cause inconvenient control over the office device. Therefore, in one preferred implementation mode of the embodiment of the present invention, an intermediate device may be adopted for processing.

FIG. 2 is a diagram of a preferred multimedia collaboration system according to an embodiment of the present invention. As shown in FIG. 2, the system may further include: an intermediate device 3, provided between the video conference system 1 and the office device 2, and the position thereof may be set according to actual requirements. The intermediate device 3 may be a gateway, a set top box or a similar device.

The video conference system 1 is arranged to control the office device 2 by means of the intermediate device 3; the intermediate device 3 is arranged to control the office device 2 in response to a control request 1 of the video conference system 1; and the office device is arranged to respond to the control of the intermediate device 3 over the office device 2.

In one preferred implementation mode of the embodiment of the present invention, the intermediate device 3 may be arranged to receive a first control command of the video conference system 1, convert the first control command into a second control command corresponding to the office device 2, and send the second control command to the office device 2.

A device control method of the embodiment of the present invention will be described below.

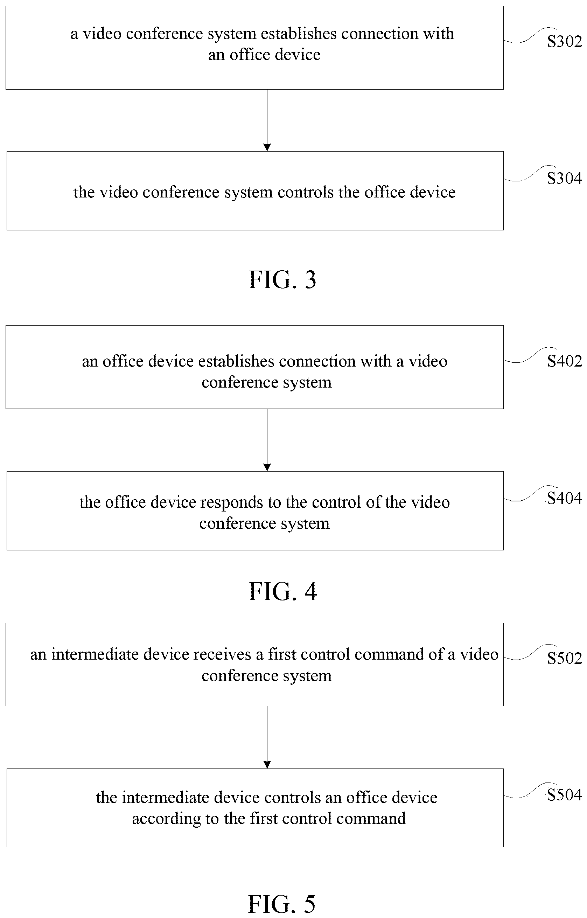

FIG. 3 is the flowchart one of a device control method according to an embodiment of the present invention. As shown in FIG. 3, the method includes Step S302 to Step S306.

In Step S302: A video conference system establishes connection with an office device.

In Step S304: The video conference system controls the office device.

In the embodiment of the present invention, the video conference system establishing connection with the office device may include at least one of the following.
(1) Connection with the office device is established in response to a request of a user, herein the request of the user includes a voice and/or operation form request, for example, for requesting that the video conference system may be connected to the office device in a voice manner, or operations may be executed through an operation interface provided by the video conference system.
(2) Semantics of the user are identified, and the connection with the office device is automatically established. For example, in a video conference, the user mentions to "desire to save and print documents", the semantics of the user may be identified, and the connection with the office device is automatically established according to the intention of the user.
(3) The connection with the office device is established in response to a request of the office device.

In one preferred implementation mode of the embodiment of the present invention, the video conference system controlling the office device may include at least one of: controlling, by the video conference system, the office device to process conference data; controlling, by the video conference system, the office device to operate itself; and controlling, by the video conference system, the office device to operate with another office device.

In one preferred implementation mode of the embodiment of the present invention, the video conference system controlling the office device may include that: the video conference system controls the office device according to the request of the user, herein the request includes a request in a voice and/or operation form (certainly, it may also be motion control, but is not limited thereto); and/or the video conference system identifies semantics of the user, and automatically controls the office device according to the semantics. For example, the user provides a schedule about Monday in a conference, and the computer may automatically record the schedule and then automatically print the schedule.

FIG. 4 is the flowchart two of a device control method according to an embodiment of the present invention. As shown in FIG. 4, the method includes Step S402 to Step S404.

In Step S402: An office device establishes connection with a video conference system.

In Step S404: The office device responds to the control of the video conference system.

In one implementation mode of the embodiment of the present invention, the office device responding to the control of the video conference system includes at least one of the following: processing, by the office device, conference data according to the control of the video conference system; operating the office device itself; and processing, by the office device, operation among between office devices.

FIG. 5 is the flowchart three of a device control method according to an embodiment of the present invention. As shown in FIG. 5, the method includes Step S502 to Step S504.

In Step S502: An intermediate device receives a first control command of a video conference system.

In Step S504: The intermediate device controls an office device according to the first control command.

In an implementation mode of the embodiment of the present invention, the intermediate device may convert the first control command into a second control command corresponding to the office device, and send the second control command to the office device, thereby implementing control over the office device.

Alternatively, the intermediate device may also receive first data sent by the office device, and send second data to the video conference system, herein the second data is data obtained by processing the first data. The data may be processed. The above-mentioned data may be a response message or may be other data, such as acquired contents. Different data may be processed differently. For example, the response message may be identified, and then the corresponding response message is sent to the video conference system. Service-class data may be directly processed, or may be sent to the video conference system after being converted into a format of the video conference system.

A device control apparatus of the embodiment of the present invention will be described below.

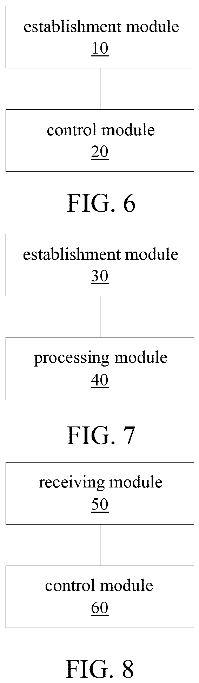

FIG. 6 is the structural block diagram one of a device control apparatus according to an embodiment of the present invention. The apparatus is located in a video conference system, and includes: an establishment module 10, arranged to establish connection between the video conference system and an office device; and a control module 20, arranged to control the office device.

In one implementation mode of the embodiment of the present invention, the establishment module 10 includes at least one of the following: a first establishment unit, arranged to establish connection with the office device in response to a request of a user, herein the request of the user includes a voice and/or operation form request; a second establishment unit, arranged to identify semantics of the user, and automatically establish connection with the office device; and a third establishment unit, arranged to establish connection with the office device in response to a request of the office device.

In one implementation mode of the embodiment of the present invention, the control module 20 includes at least one of: a first control unit, arranged to control the office device to process conference data; a second control unit, arranged to control the office device to operate itself; a third control unit, arranged to control the office device to operate with another office device; and a fourth control unit, arranged to acquire data from the office device and process the acquired data.

In one implementation mode of the embodiment of the present invention, the control module 20 includes: a fifth control unit, arranged to control the office device according to the request of the user, herein the request includes a voice and/or operation form request; and/or a sixth control unit, arranged to identify semantics of the user, and automatically control the office device according to the semantics.

The above-mentioned establishment module 10 may directly establish connection with the office device, or may establish connection with the office device by means of an intermediate device. The control module 20 may directly control the office device, or may control the office device by means of the intermediate device.

FIG. 7 is the structural block diagram two of a device control apparatus according to an embodiment of the present invention. The apparatus is located in an office device, and includes: an establishment module 30, arranged to establish connection between the office device and a video conference system; and a processing module 40, arranged to respond to the control of the video conference system.

In an implementation mode of the embodiment of the present invention, the processing module 40 includes at least one of: a first processing unit, arranged to process conference data according to the control of the video conference system; a second processing unit, arranged to operate the office device itself; a third processing unit, arranged to process operation between the office device and another office device; and a third processing unit, arranged to send data to the video conference system.

FIG. 8 is a structural block diagram 3 of a device control apparatus according to an embodiment of the present invention. The apparatus is located in an intermediate device, and includes: a receiving module 50, arranged to receive a first control command of a video conference system; and a control module 60, arranged to control an office device according to the first control command.

In an implementation mode of the embodiment of the present invention, the control module 60 includes: a conversion unit, arranged to convert the first control command into a second control command corresponding to the office device; and a sending unit, arranged to send the second control command to the office device.

Alternatively, the receiving module 50 is further arranged to receive first data sent by the office device. The apparatus may further include: a sending module, arranged to send second data to the video conference system, herein the second data is data obtained by processing the first data. The control module 60 may process the data. The above-mentioned data may be a response message or may be other data, such as acquired contents. Different data may be processed differently. For example, the response message may be identified, and then the corresponding response message is sent to the video conference system. Service-class data may be directly processed, or may be sent to the video conference system after being converted into a format of the video conference system.

By means of the embodiment of the present invention, the video conference system is arranged to control the office devices; and the office devices are arranged to respond to the control of the video conference system. The problem that the function of a video conference is relatively single and independent is solved, thereby achieving the implementation of the collaboration between the video conference system and the office devices. Office automation is implemented in the field of video conferences, jobs after a conference is finished are handed over to a conferencing process, and office real-time performance in the conferencing process is implemented, thereby improving the efficiency.

A preferred implementation mode of the embodiment of the present invention is described below.

In the preferred implementation mode, a multimedia collaboration system may include:
an automated office device, namely a device for office automation, including device such as a printer, a copying machine, a fax machine, a projector, a scanner and a microcomputer, etc;
a connecting medium, namely a medium for butting the automated office device and a conference television system, including, but not limited to, all media capable of connecting the automated office device such as a network, Bluetooth, and a serial port, etc;
a video conference system, namely a video conference system including an office device control module and an office device user operation interface;
an office device control module, namely a module for controlling the automated office device in the video conference system, deployed in each network element such as a terminal and a Micro Control Unit (MCU) probably butted with the automated office device to control in the video conference system; and
an office device user operation interface, namely a control interface which is provided for a user and may implement office automation in a conferencing process. The interface mentioned here is generalized, and any interfaces capable of achieving the aim may be called as office automation user operation interfaces.

The conference television system may have drive functions of the relevant automated office device at the time of leaving the factory. In the conference television system, the relevant automated office device supported in the system is configured, and the video conference system and the automated office device establish connection. The connection process may be divided into automatic connection and manual connection. The connection direction may refer to: initiating the automatic connection from the office device control module side, or initiating from the automated office device end.

In the conferencing process, if there is a real-time office demand, office operations are executed by means of the user interface of the office device control module. If an operation result of Step B is successful, control succeeds, office automation is completed, and the operation result is displayed. If the operation result of step B is failure, a prompt indicative of inoperability is given. For example, in the conferencing process, all parties participating in the conference complete discuss about relevant contents by means of an electronic whiteboard, the contents of the electronic whiteboard need to be eliminated, when a next topic is entered, in order to ensure saving of the discussed contents in time, the user may click the office device control user interface, and click a printing button to print and output the current contents of the whiteboard.

Compared with the prior art, the present invention originates that an office automation function is introduced to the field of video conferences initially, jobs after the conference is finished are handed over to the conferencing process by fully utilizing relevant automated office device resources on the periphery of a conference room, and office real-time performance in the conferencing process is implemented. Particularly, process data of the conferencing process may be effectively saved and processed in time, thereby further improving the efficiency. The present invention may particularly serve as a supplement for a video conference interaction and collaboration function.

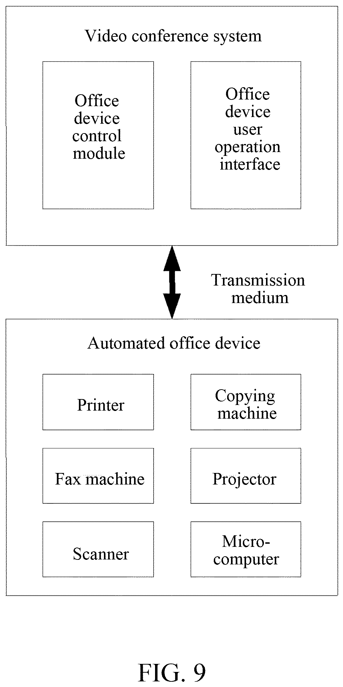

FIG. 9 is an architecture diagram of a preferred multimedia collaboration system according to an embodiment of the present invention. As shown in FIG. 9, a conference television system, a connecting medium and an automated office device are included. Herein the conference television system includes an office device control module and an office device user operation interface.

A video conference system is a video conference system including the office device control module and the office device user operation interface.

The office device control module is a module for controlling the automated office device in the video conference system, and is deployed in each network element such as a terminal and a Micro Control Unit (MCU) probably butted with the automated office device to control in the video conference system.

The office device user operation interface is a control interface which is provided for a user and may implement office automation in a conferencing process. The interface mentioned here is generalized, and any interfaces capable of achieving the aim may be called as office automation user operation interfaces.

A transmission medium is a medium for butting the automated office device and the conference television system, including, but not limited to, all media capable of connecting the automated office device such as a network, Bluetooth, and a serial port, etc.

The automated office device is a device for office automation, including a printer, a copying machine, a fax machine, a projector, a scanner and a microcomputer, etc.

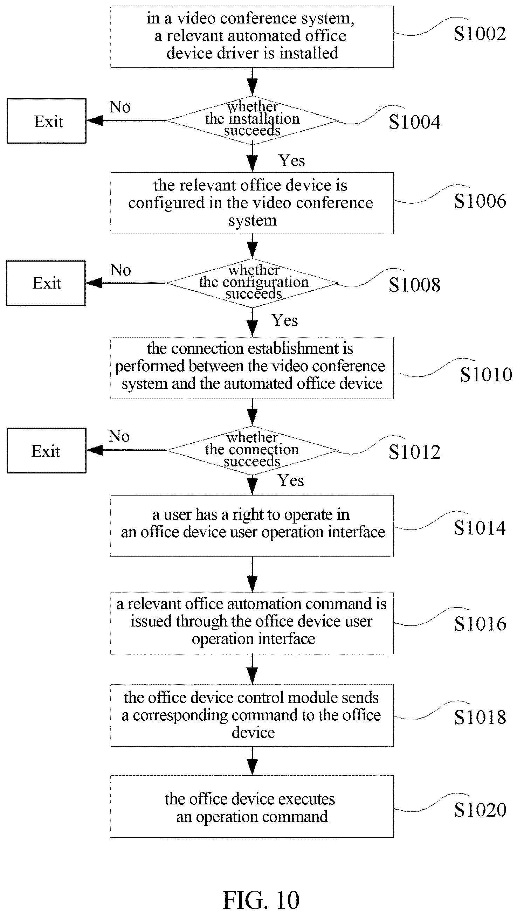

FIG. 10 is a flowchart of a preferred device control method according to an embodiment of the present invention. As shown in FIG. 10, the method includes Step S1002 to Step S1020.

In Step S1002: In a video conference system, a relevant automated office device driver is installed. Installation of an automated office device driver commonly used in the industry may also be completed in default when the video conference system leaves the factory. An installation deployment position of the driver may be determined according to an actual operation use habit of a user. A driver installation result is saved.

In the embodiment of the present invention, in the video conference system, the relevant automated office device driver is provided. The automated office device driver may have been installed when the video conference system leaves the factory, or may be installed by the user according to actual use requirements. The installation deployment position of the driver may be determined according to the actual operation use habit of the user. And/or, relevant information regarding installation of the driver is displayed on the user operation interface.

In Step S1004: If the execution fails in Step S1002, abnormality is prompted, and the step is exited.

In Step S1006: If the execution succeeds in Step S1002, a relevant office device is configured in the video conference system. And/or, the configuration information and state of the automated office device are displayed on the user operation interface.

In Step S1008: If the configuration fails in Step S1006, abnormality is prompted, and the step is exited.

In Step S1010: If the configuration succeeds in Step S1006, the video conference system and the automated office device establish connection. The connection process may be divided into automatic connection and manual connection. The connection direction may refer to: initiating the automatic connection from the office device control module side, or initiating from the automated office device end. And/or, the connection state of the automated office device is displayed on the user operation interface.

Step S1012: If the connection fails in Step S1010, abnormality is prompted, and the step is exited.

Step S1014: If the connection succeeds in Step S1010, the user has a right to operate in the office device user operation interface, the interface being in an enabled state.

Step S1016: In the conferencing process, the user issues a relevant office automation command to the office device control module by means of the office device user operation interface according to actual situations. And/or, an operation result or an operation state is displayed on the user operation interface.

Step S1018: The office device control module sends a corresponding command to the office device by means of a standard communication protocol.

Step S1020: The office device executes an operation command, and the flow is ended.

In this implementation mode, implementation of a specific embodiment for printing and saving files in time in a discussing process of all parties participating in the conference via an electronic whiteboard in the conferencing process is described.

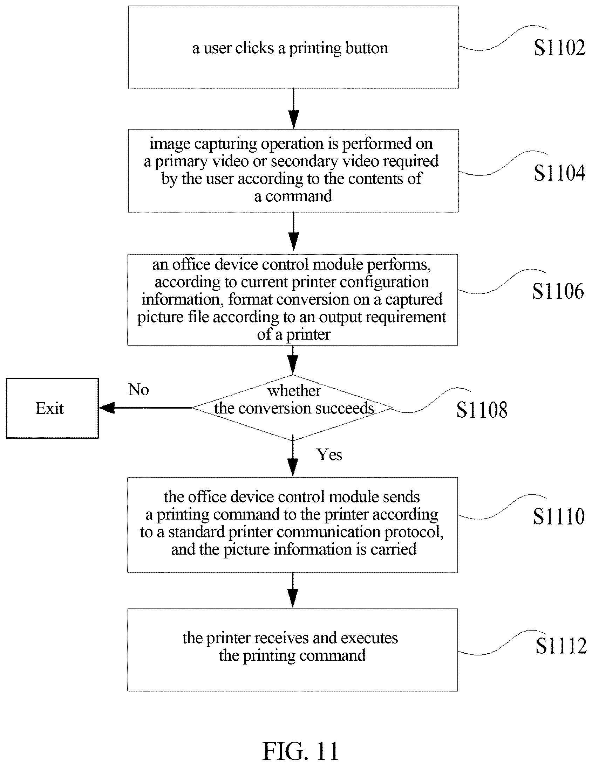

FIG. 11 is a flowchart showing implementation of printing of a conference television system in a conference process according to an embodiment of the present invention. As shown in FIG. 11, the method includes Step S1102 to Step S1112.

In Step S1102: In a conferencing process, when the user needs to print a current video image, the user clicks a printing button by means of the office device user operation interface.

In Step S1104: After receiving a printing command, the office device control module saves images for a primary video or secondary video required by the user according to the contents of the command.

In Step S1106: The office device control module performs, according to current printer configuration information, format conversion on a captured picture file according to an output requirement of the printer.

In Step S1108: If the execution fails in Step S1106, failure is prompted, and the step is exited.

In Step S1110: If the execution succeeds in Step S1106, the office device control module sends the printing command to the printer according to a standard printer communication protocol, and picture information is carried.

In Step S 1112: The printer receives and executes the printing command, and the flow is ended.

The embodiment of the present invention implements a brand new video conference application scenario. Particularly, as a supplement for a video conference interaction and collaboration function, the efficiency can be further improved. If there are no the above-mentioned method and system, all office demands must be completed after the conference, and some pieces of important information in the conferencing process are probably lost. By means of the embodiment of the present invention, jobs after the conference is finished may be handed over to the conferencing process by using relevant automated office device resources on the periphery of a conference room, and office real-time performance in the conferencing process is implemented, thereby improving the working efficiency.

From the above descriptions, it may be seen that the present invention achieves the following technical effects. The problems that the function of a video conference is relative single and independent is solved, thereby achieving implementing the collaboration between the video conference system and the office device. Office automation is implemented in the field of video conferences, jobs after a conference is finished are handed over to a conferencing process, and office real-time performance in the conferencing process is implemented, thereby further improving the efficiency.

Obviously, those skilled in the art shall understand that the above-mentioned all modules or all steps of the present invention may be implemented using a general calculation apparatus, they may be centralized on a single calculation apparatus or may be distributed on a network composed of a plurality of calculation apparatuses. Alternatively, they may be implemented using executable program codes of the calculation apparatuses. Thus, they may be stored in a storage apparatus and executed by the calculation apparatuses, and under certain conditions, they can be implemented by executing the shown or described steps in a sequence different from this sequence or by manufacturing them into separate integrated circuit modules respectively, or by manufacturing a plurality of modules or steps therein into a single integrated circuit module. Thus, the present invention is not limited to combination of any specific hardware and software.

The above is only the preferred embodiments of the present invention, and is not intended to limit the present invention. There may be various modifications and variations in the present invention for those skilled in the art. Any modifications, equivalent replacements, improvements and the like within the spirit and principle of the present invention shall fall within the scope of protection of the present invention.

### Industrial Applicability

As above, by means of the above-mentioned embodiments and the preferred implementation mode, the problem that the function of the video conference is relative single and independent is solved, thereby achieving implementing the collaboration between the video conference system and the office device.

## Claims

1. A multimedia collaboration system, comprising: a video conference system and office devices, wherein
the video conference system is arranged to control the office devices; and
the office devices are arranged to respond to control of the video conference system.

2. The system according to claim 1, wherein the video conference system comprises:
a first communication apparatus, arranged to communicate with the office devices; and
a control apparatus, arranged to control the office devices.

3. The system according to claim 2, wherein the control apparatus is arranged for at least one of:
acquiring conference data, and controlling the office devices to process the conference data;
controlling the office devices to operate themselves;
controlling operations among the office devices; and
acquiring data from the office devices and processing the data.

4. The system according to any one of claims 1-3, wherein an office device comprises:
a second communication apparatus, arranged to communicate with the video conference system; and
a processing apparatus, arranged to respond to the control of the video conference system.

5. The system according to claim 4, wherein the processing apparatus is arranged for at least one of:
processing conference data according to the control of the video conference system;
operating the office device itself;
processing operations among the office devices; and
sending data to the video conference system.

6. The system according to claim 1, wherein an intermediate device is further comprised,
the video conference system is further arranged to control the office devices by means of the intermediate device;
the intermediate device is arranged to control the office devices in response to a control request of the video conference system; and
the office devices are arranged to respond to the control of the intermediate device over the office devices.

7. The system according to claim 6, wherein the intermediate device is arranged to receive a first control command of the video conference system, convert the first control command into a second control command corresponding to the office devices, and send the second control command to the office devices.

8. A device control method, comprising:
establishing connection between a video conference system and office devices; and
controlling, by the video conference system, the office devices.

9. The method according to claim 8, wherein establishing connection between the video conference system and the office devices comprises at least one of:
establishing connection with the office devices in response to a request of a user, wherein the request of the user comprising a voice and/or operation form request;
identifying semantics of the user, and automatically establishing connection with the office devices; and
establishing connection with the office devices in response to a request of the office devices.

10. The method according to claim 8 or 9, wherein controlling, by the video conference system, the office devices comprises at least one of:
controlling, by the video conference system, the office devices to process conference data;
controlling, by the video conference system, the office devices to operate themselves;
controlling, by the video conference system, the office devices to operate with other office devices; and
acquiring, by the video conference system, data from the office devices, and processing the data.

11. The method according to claim 8 or 9, wherein controlling, by the video conference system, the office devices comprises:
controlling, by the video conference system, the office devices according to a request of a user, wherein the request comprises a voice and/or operation form request; and/or
identifying, by the video conference system, semantics of the user, and automatically controlling the office devices according to the semantics.

12. A device control method, comprising:
establishing connection between office devices and a video conference system; and
responding by the office devices to the control of the video conference system.

13. The method according to claim 12, wherein responding by the office devices to the control of the video conference system comprises at least one of:
processing, by the office devices, conference data according to the control of the video conference system;
operating the office devices themselves;
processing, by the office devices, operation among the office devices; and
sending, by the office devices, data to the video conference system.

14. A device control method, comprising:
receiving, by an intermediate device, a first control command of a video conference system; and
controlling, by the intermediate device, office devices according to the first control command.

15. The method according to claim 14, wherein controlling, by the intermediate device, the office devices according to the first control command comprises:
converting, by the intermediate device, the first control command into a second control command corresponding to the office devices; and
sending, by the intermediate device, the second control command to the office devices.

16. The method according to claim 14 or 15, wherein the following is further comprised:
receiving, by the intermediate device, first data sent by the office devices; and
sending, by the intermediate device, second data to the video conference system, wherein the second data are data obtained by processing the first data.

17. A device control apparatus, located in a video conference system, comprising:
an establishment module, arranged to establish connection between the video conference system and office devices; and
a control module, arranged to control the office devices.

18. The apparatus according to claim 17, wherein the establishment module comprises at least one of:
a first establishment unit, arranged to establish connection with the office devices in response to a request of a user, wherein the request of the user comprising a voice and/or operation form request;
a second establishment unit, arranged to identify semantics of the user, and automatically establish connection with the office devices; and
a third establishment unit, arranged to establish connection with the office devices in response to a request of the office devices.

19. The apparatus according to claim 17 or 18, wherein the control module comprises at least one of:
a first control unit, arranged to control the office devices to process conference data;
a second control unit, arranged to control the office devices to operate themselves;
a third control unit, arranged to control the office devices to operate with other office devices; and
a fourth control unit, arranged to acquire data from the office devices and process the data.

20. The apparatus according to claim 17 or 18, wherein the control module comprises:
a fifth control unit, arranged to control the office devices according to a request of a user, wherein the request comprising a voice and/or operation form request; and/or
a sixth control unit, arranged to identify semantics of the user, and automatically control the office devices according to the semantics.

21. A device control apparatus, comprising:
an establishment module, arranged to establish connection between an office devices and a video conference system; and
a processing module, arranged to respond to control of the video conference system.

22. The apparatus according to claim 21, wherein the processing module comprises at least one of:
a first processing unit, arranged to process conference data according to the control of the video conference system;
a second processing unit, arranged to operate the office devices themselves;
a third processing unit, arranged to process operation among the office devices; and
a fourth processing unit, arranged to send data to the video conference system.

23. A device control apparatus, located in an intermediate device, comprising:
a receiving module, arranged to receive a first control command of a video conference system; and
a control module, arranged to control office devices according to the first control command.

24. The apparatus according to claim 23, wherein the control module comprises:
a conversion unit, arranged to convert the first control command into a second control command corresponding to the office devices; and
a sending unit, arranged to send the second control command to the office devices.

25. The apparatus according to claim 23 or 24, wherein
the receiving module is further arranged to receive first data sent by the office devices; and
the apparatus further comprises: a sending module, arranged to send second data to the video conference system, wherein the second data are data obtained by processing the first data.
